# FASCICULE DE BREVET EUROPEEN

(11) **EP 3 080 496 B1**
(45) Date de publication et mention de la délivrance du brevet: **19.07.2023**
(21) Numéro de dépôt: 14827502.7
(22) Date de dépôt: 11.12.2014
(51) Int. Cl.: F16K 27/02, F02D 9/10, F16K 31/04, H02K 5/04, F02D 11/10, F02M 26/54

(54) **PLAQUE DE SUPPORT D'UN MOTEUR DANS UN CORPS DE VANNE**
TRÄGERPLATTE FÜR EINEN MOTOR IN EINEM VENTILKÖRPER
SUPPORT PLATE FOR A MOTOR IN A VALVE BODY

(30) Priorité: 11.12.2013 FR 1362398
(43) Date de publication de la demande: 19.10.2016
(73) Titulaire: Valeo Systèmes de Contrôle Moteur, 95800 Cergy Saint Christophe (FR)
(72) Inventeur: COLLET, Thomas, F-95800 Cergy (FR); GAUTIER, Sylvain, F-95300 Ennery (FR); SANCHES, Michael, F-94420 Le Plessis-Trevise (FR)
(74) Mandataire: Valeo Powertrain Systems
(86) Numéro de dépôt international: PCT/FR2014/053287
(87) Numéro de publication internationale: WO 2015/087008

(56) Documents cités:
- EP-A1- 2 345 806
- US-A- 6 067 958
- US-A1- 2002 171 059
- US-A1- 2005 092 293
- 4-Max.co.uk: "Purple Power Rear Mount SetsFor Outrunner Motors", http://www.4-max.co.uk/rearmountsets.htm , 17 July 2010 (2010-07-17), Retrieved from the Internet: URL:https://web.archive.org/web/2010071700 1709/http:/www.4-max.co.uk:80/rearmountset s.htm [retrieved on 2019-11-05] & 4-max.co.uk: "4-Max for Purple Power Motors", www.4-max.co.ukppb-2831.htm , 20 August 2008 (2008-08-20), Retrieved from the Internet: URL:https://web.archive.org/web/2008082005 0241/http://www.4-max.co.uk/ppb-2831.htm [retrieved on 2019-11-05]

## Description

L'invention se rapporte à une vanne telle que défini dans la revendication 1. Le terme « vanne » est général et désigne tout type de dispositif destiné à réguler le débit et/ou la pression d'un fluide, notamment un gaz circulant dans un conduit d'une installation ou d'un véhicule.

De façon conventionnelle, une vanne possède un corps et met en oeuvre un organe d'ouverture/fermeture dudit conduit, pouvant par exemple être un volet, ledit volet étant mû par un moteur logé la plupart du temps dans ledit corps.

Habituellement ce moteur est électrique et est monté dans le corps de la vanne au moyen d'une plaque solidaire dudit moteur, ladite plaque étant destinée à venir se loger dans un évidement dudit corps. Cette plaque sert à la fois à positionner correctement le moteur dans ledit évidement du corps puis à le fixer audit corps afin d'être parfaitement opérationnel. Généralement, cette plaque présente le double inconvénient d'imposer un usinage complexe du corps afin de permette une bonne indexation de la plaque sur le corps et d'introduire notamment un jeu, qui est susceptible d'altérer la qualité du montage du moteur dans ledit corps. Il est connu des plaques de ce type notamment dans les demandes de brevet US6067958A, US2005/092293A et du document « Purple Power Rear Mount Sets For Outrunner Motors » de Mx.co.uk.

L'invention se rapporte à une vanne comportant une plaque de support d'un moteur, qui est simple et rapide à fabriquer et qui est performante.

La vanne comporte un corps (3) et un assemblage d'actionnement (5) comprenant un moteur (2) et une plaque (4), la plaque comprenant un corps central et au moins une languette de positionnement ayant un pourtour comportant une portion sensiblement en demi-cercle. Puisqu'un usinage en demi-cercle est facile et rapide à réaliser, le corps de vanne recevant ladite plaque, peut être fabriqué avec précision et de manière économique. De manière avantageuse, la plaque épouse étroitement les formes de l'évidement du corps dans lequel elle est logée. De façon préférentielle, la plaque est monobloc, chaque languette et le corps central constituant une seule et même pièce. Chaque languette représente une excroissance du corps central et sert d'organe de guidage pour placer correctement la dite plaque dans la vanne. Il est supposé que ladite plaque est solidarisée à un moteur d'actionnement de la vanne, et qu'elle contribue à placer ledit moteur dans une position parfaitement fonctionnelle au sein de ladite vanne.

Avantageusement, la plaque comprend une première languette de positionnement et une deuxième languette de positionnement ayant chacune un pourtour comportant une portion sensiblement en demi-cercle. La présence de deux languettes accroît la rigueur et la précision de positionnement de la plaque dans la vanne en diminuant les degrés de liberté de déplacement de ladite plaque dans ladite vanne.

De façon préférentielle, la plaque s'étend dans un plan, les première et deuxième languettes étant décalées angulairement dans ledit plan.

Chaque languette possède une portion intermédiaire rectiligne, reliant la portion en demi-cercle au corps central.

La portion intermédiaire peut comporter deux bords rectilignes formant entre eux un angle inférieur à 70°, notamment inférieur à 50°, par exemple inférieur à 30°.

La portion intermédiaire comporte deux bords rectilignes sensiblement parallèles. Le terme « sensiblement » signifie que les deux bords peuvent ne pas être parfaitement parallèles, une inclinaison inférieure à 5° pouvant être tolérée entre lesdits deux bords.

La vanne est destinée à recevoir un assemblage d'actionnement de vanne, comprenant un moteur et une plaque, ladite plaque étant fixée audit moteur pour former une pièce commune. De cette manière, la plaque est fixée préalablement au moteur, avant que l'assemblage d'actionnement résultant soit inséré dans la vanne. Ladite plaque peut, par exemple, être fixée au moteur par sertissage. Selon un autre mode de réalisation de l'invention, la plaque et le moteur constituent une pièce monobloc. Le moteur sert à actionner un organe d'ouverture/fermeture de la vanne comme par exemple un volet. Préférentiellement ledit moteur est un moteur électrique.

Avantageusement, le moteur possède une forme allongée et la plaque est fixée à une extrémité dudit moteur, de manière à ce que le plan de ladite plaque soit perpendiculaire à l'axe longitudinal dudit moteur.

De façon avantageuse, la plaque saille latéralement dudit moteur.

Le corps de la vanne est doté d'un logement et d'un évidement destinés à recevoir un assemblage, le moteur venant se placer dans le logement et la plaque dans l'évidement, ledit évidement étant délimité par une paroi dont au moins une zone prévue pour loger chaque languette présente un profil en demi-cercle. L'usinage de l'évidement se retrouve simplifié par la présence d'au moins une zone en demi-cercle, une forme en demi-cercle étant facile à réaliser au moyen de techniques usuelles et largement éprouvées.

Avantageusement, la paroi est réalisée en fonderie et a été localement usinée pour obtenir le profil en demi-cercle de chaque zone.

De façon préférentielle, la paroi présente au moins un pion d'indexation, notamment deux pions d'indexation en saillie destinés à guider l'insertion de chaque languette. Chaque pion agit comme une butée de guidage contre laquelle va venir s'appuyer la languette de positionnement pour placer correctement la plaque dans l'évidement.

Préférentiellement, le corps de la vanne est destiné à recevoir un assemblage comportant une plaque dont la languette possède une portion intermédiaire rectiligne reliant la portion en demi-cercle au corps central, ladite portion rectiligne comportant deux bords rectilignes et sensiblement parallèles, les deux pions d'indexation étant placés en regard desdits deux bords.

Une vanne selon l'invention, est performante en raison d'un positionnement systématiquement optimisé du moteur, grâce à une géométrie adaptée de la plaque de support dudit moteur et de l'évidement de ladite vanne destiné à recevoir ladite plaque. Une telle vanne a de plus l'avantage d'être facile et rapide à fabriquer, grâce aux formes simplifiées de la plaque de support du moteur et de l'évidement de la vanne prévu pour recevoir ladite plaque. Une vanne selon l'invention présente l'avantage d'être peu coûteuse en raison de la facilité à fabriquer ladite plaque et les contours dudit évidement.

On donne ci-après une description détaillée d'un mode de réalisation préféré d'une plaque de support moteur selon l'invention et d'un corps de vanne destiné à recevoir ladite plaque, en se référant aux figures 1 à 5.
- la figure 1 est une vue de coté d'une vanne selon l'invention, comprenant un assemblage d'actionnement selon à l'invention, et un corps prévu pour recevoir ledit assemblage,
- La figure 2 est une vue en perspective d'un assemblage d'actionnement selon l'invention,
- La figure 3 est une vue de face d'une plaque de support d'un moteur, ladite plaque et ledit moteur constituant l'assemblage d'actionnement de la figure 2,
- La figure 4 est une schématique et comparative d'une languette de positionnement d'une plaque de support de l'état de la technique et d'une plaque support selon l'invention, et
- La figure 5 est une vue en perspective agrandie d'une zone d'un corps de vanne selon l'invention, et destinée à loger une languette de positionnement d'une plaque support selon l'invention.

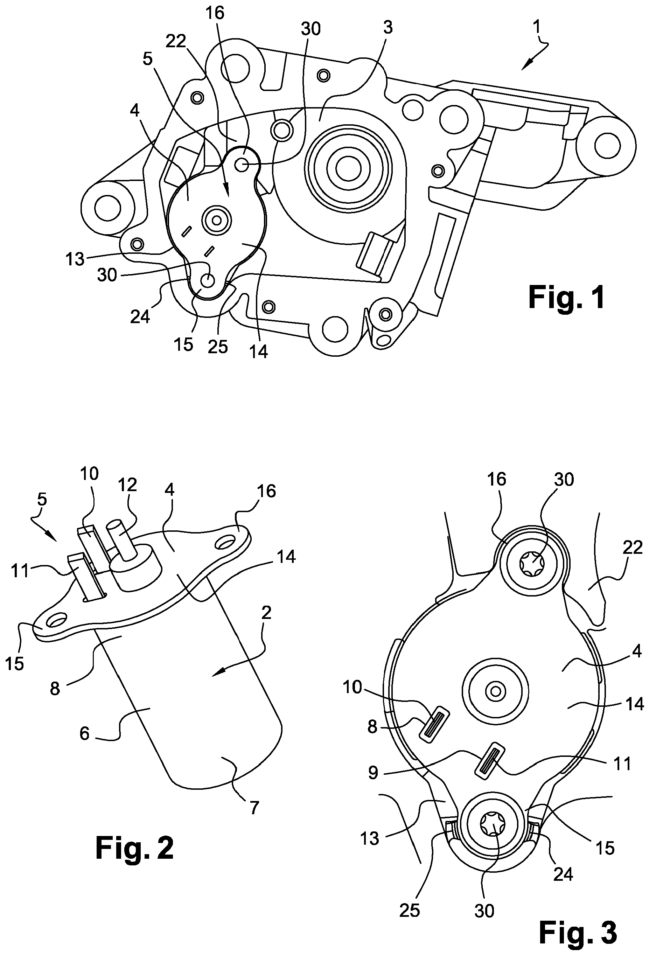

En se référant à la figure 1, une vanne 1 selon l'invention possède un volet d'ouverture/fermeture piloté par un moteur électrique 2, afin de réguler la pression et le débit d'un fluide circulant dans un conduit. Une telle vanne peut par exemple être implantée dans un circuit de recirculation des gaz d'échappement (ou EGR, de l'anglais *Exhaust Gas Recirculation)* d'un moteur de véhicule, pour gérer les conditions de passage des gaz d'échappement vers le circuit d'admission d'air dudit moteur. Cette vanne comprend un corps 3 doté d'un logement pour recevoir le moteur 2 et le placer dans une position opérationnelle au sein de la vanne 1.

En se référant à la figure 2, une plaque 4 de support est fixée au moteur 2 pour former un assemblage d'actionnement 5. Cette plaque 4 est destinée à coopérer avec le corps 3 de la vanne 1 dans le but de placer systématiquement ledit moteur 2 dans une position opérationnelle dans ladite vanne 1. Le moteur 2 possède un boitier 6 de forme sensiblement cylindrique, dont l'axe de révolution constitue un axe longitudinal dudit moteur 2. Une extrémité 7 du boitier 6 se termine par un palier inférieur non visible sur la figure, et l'autre extrémité opposée 8 de ce boitier 6 est obturée par la plaque 4 de support. Cette plaque 4 est plane et de faible épaisseur, et est orientée sur le boitier 6 de manière à ce que son plan soit perpendiculaire à l'axe de révolution dudit boitier 6. Cette plaque 4 possède des dimensions qui sont supérieures à la section transversale du boitier 6, si bien que ladite plaque 4 déborde latéralement dudit boitier 6. La plaque 4 comporte deux ouvertures 8,9 pour laisser émerger deux tiges 10,11 représentant les deux pôles 8,9 électriques du moteur 2, ladite plaque étant également traversée par un arbre d'entrainement 12 dudit moteur 2.

La plaque 4 est d'abord fixée au boitier 6 du moteur 2 par sertissage pour former l'assemblage d'actionnement 5, ledit assemblage 5 étant ensuite implanté dans le corps 3 de la vanne 1.

En se référant aux figures 1, 3 et 5 le corps 3 de la vanne 1 possède un logement de forme sensiblement cylindrique destiné à recevoir le moteur 2 électrique, et un évidement 13 prévu pour insérer la plaque 4 de support, ledit évidement 13 prolongeant ledit logement et débouchant vers l'extérieur du corps 3 de la vanne 1. L'assemblage d'actionnement 5 est placé dans le corps 3 de la vanne 1, en faisant d'abord pénétrer le moteur 2 dans le logement puis en positionnement la plaque 4 dans l'évidement 13 lorsque ledit moteur 2 arrive en bout de course dans ledit logement.

En se référant à la figure 3, la plaque 4 possède un corps central 14 de forme sensiblement circulaire et deux languettes 15,16 de positionnement prolongeant ledit corps central 14. Le corps central 14 et les deux languettes 15,16 de positionnement constituent une seule pièce, qui est globalement plane et d'épaisseur constante. Les deux languettes 15,16 constituent deux excroissances du corps central, qui sont décalées angulairement dans le plan de la plaque 4. Ces deux languettes 15,16 font entre elles un angle inférieur ou égal à 180° et supérieur à 100°.

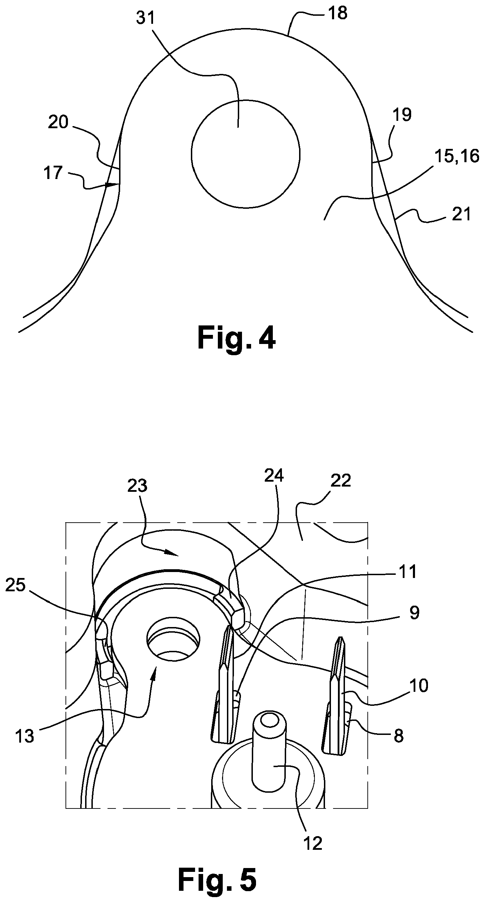

En se référant à la figure 4, chaque languette de positionnement 15,16 comprend une partie intermédiaire 17 rectiligne et une partie distale 18 ayant un pourtour sensiblement en demi-cercle. La partie intermédiaire 17 comporte deux bords rectilignes 19,20 et sensiblement parallèles, et relie le corps central 14 de la plaque 4 à la partie distale 18 de chaque languette de positionnement 15,16. Ces languettes 15,16 se distinguent des languettes 21 déjà existantes, par le fait qu'elles comportent une partie intermédiaire 17 rectiligne prolongée par une partie distale 18 en forme de demi-cercle, les languettes 21 déjà existantes se rétrécissant progressivement et de façon monotone pour se terminer par une partie distale en forme d'arc de cercle inférieur à un demi-cercle. Les languettes de positionnement 21 existantes possède une forme assez indéfinie, qui s'amenuise progressivement sans repère marquant. Chaque languette 15,16 est percée d'une ouverture 31, de manière à permettre le passage d'une vis 30 de fixation pour arrimer l'assemblage d'actionnement 5 dans le corps 3 de la vanne 1.

En se référant aux figures 1, 3 et 5, l'évidement 13 du corps 3 de la vanne 1 destiné à recevoir la plaque 4 de support, est pratiqué dans une paroi 22 en fonderie dudit corps 3.

En se référant à la figure 5, cette paroi 22 comporte deux zones 23 spécifiques, aptes à recevoir les languettes 15,16 de positionnement de la plaque 4, lesdites deux zones 23 étant obtenues par un usinage en demi-cercle de ladite paroi 22. Pour recevoir les languettes de positionnement 21 existantes, cette paroi 22 en fonderie était usinée de façon compliquée, pour s'adapter au profil complexe desdites languettes existantes 21. Un usinage en demi-cercle de cette paroi 22, est facile et rapide à exécuter car il est réalisé en une seule opération, et de façon fiable et maitrisée. Les languettes de positionnement 15,16 en forme de demi-cercle d'une plaque support 4 selon l'invention, peuvent venir s'insérer idéalement dans les zones 23 en demi-cercle de la paroi 22 en fonderie du corps 3 de la vanne 1, pour assurer un positionnement idéal de ladite plaque 4 dans l'évidement 13 délimité par ladite paroi 22. Ce positionnement idéal s'effectue sans jeu, et permet au moteur 2 d'occuper, de façon systématique, une position pleinement opérationnelle au sein du corps 3 de la vanne.

En se référant aux figures 1, 3 et 5, le positionnement de la plaque 4 dans l'évidement 13 est amélioré par la présence de deux pions 24,25 d'indexage émergeant de chaque zone 23 spécifique dudit évidement 13 prévue pour recevoir une languette de positionnement 15,16. Chaque pion 24,25 est de forme légèrement incurvé, car il épouse la forme en demi-cercle de la zone 23 prévue pour recevoir la languette 15,16, et se retrouve en vis-à-vis de l'un des deux bords rectilignes 19,20 de la partie intermédiaire 17 d'une languette 15,16 de positionnement. Ces deux pions 24,25 servent à positionner rigoureusement et avec précision la plaque 4 dans l'évidement 13.

Un procédé de montage d'un moteur électrique dans une vanne 1 selon l'invention, comprend les étapes suivantes :
- une étape de fixation de la plaque 4 de support à une extrémité du moteur 2 pour obtenir un assemblage d'actionnement 5,
- une étape d'insertion dudit assemblage 5 dans le corps 3 de la vanne au moyen d'une introduction du moteur 2 dans le logement,
- une étape de coulissement de l'assemblage 5 jusqu'à ce qu'une extrémité 7 du moteur 2 arrive au fond du logement et que la plaque 4 parvienne dans l'évidement,
- une étape d'ajustement rotatif de l'assemblage 5 de manière à ce que chaque languette de positionnement 15,16 pénètre dans chaque zone 23 en demi-cercle de la paroi 22 délimitant ledit évidement 13, les deux pions 24,25 devant se retrouver au niveau de chaque partie intermédiaire 17 d'une languette,
- une étape de vissage de l'assemblage d'actionnement 5 ainsi positionné, par l'intermédiaire de deux vis 30 passant par les ouvertures 31 des deux languettes 15,16 de positionnement.
- une étape de vissage de l'assemblage d'actionnement 5 ainsi positionné, par l'intermédiaire de deux vis 30 passant par les ouvertures 31 des deux languettes 15,16 de positionnement.

## Revendications

1. Vanne (1) comportant un corps (3) et un assemblage d'actionnement (5) comprenant un moteur (2) et une plaque (4), la plaque comprenant un corps central (14) et au moins une languette (15,16) de positionnement ayant un pourtour comportant une portion (18) sensiblement en demi-cercle,
**caractérisé en ce que** chaque languette (15, 16) possède une portion intermédiaire (17) rectiligne, reliant la portion (18) en demi-cercle au corps central (14), la portion intermédiaire (17) comportant deux bords rectilignes (19,20) sensiblement parallèles.

2. Vanne (1) selon la revendication 1 dans laquelle la plaque comprend une première languette (15) de positionnement et une deuxième languette (16) de positionnement ayant chacune un pourtour comportant une portion (18) sensiblement en demi-cercle.

3. Vanne (1) selon la revendication 1 ou 2, la plaque (4) s'étendant dans un plan, et les première et deuxième languettes (15,16) étant (14) décalées angulairement dans ledit plan.

4. Vanne (1) selon une des revendications 1 à 3, ladite plaque (4) étant fixée audit moteur (2) pour former une pièce commune.

5. Vanne (1) selon une des revendications 1 à 3, dans laquelle le moteur (2) possède une forme allongée et la plaque (4) est fixée à une extrémité (8) dudit moteur (2) de manière à ce que le plan de ladite plaque (4) soit perpendiculaire à l'axe longitudinal dudit moteur (2).

6. Vanne (1) selon une la revendication 5, dans laquelle la plaque (4) saille latéralement dudit moteur (2).

7. Vanne (1) selon une des revendications 1 à 6, dans laquelle le corps (3) de vanne (1) est doté d'un logement et d'un évidement (13) destinés à recevoir un assemblage (5), le moteur (2) venant se placer dans le logement et la plaque (4) dans l'évidement (13), ledit évidement (13) étant délimité par une paroi (22) dont au moins une zone (23) prévue pour loger chaque languette (15,16) présente un profil en demi-cercle.

8. Vanne (1) selon la revendication 7, dans laquelle dans laquelle la paroi (22) est réalisée en fonderie et a été localement usinée pour obtenir le profil en demi-cercle de chaque zone (23).

9. Vanne (1) selon une des revendications 7 ou 8, dans laquelle dans laquelle la paroi (22) présente au moins un pion d'indexation (24,25), notamment deux pions (24,25) d'indexation en saillie destinés à guider l'insertion de chaque languette (15,16).

10. Vanne (1) selon la revendications 9, dans laquelle le corps est destiné à recevoir l'assemblage (5) comportant la plaque (4), et dans lequel les deux pions (24,25) d'indexation sont placés en regard des deux bords rectilignes (19,20) de la portion intermédiaire (17).

## Patentansprüche

1. Ventil (1), welches einen Körper (3) und eine Betätigungsanordnung (5), die einen Motor (2) und eine Platte (4) umfasst, aufweist, wobei die Platte einen zentralen Körper (14) und mindestens eine Positionierlasche (15, 16) mit einem Umfang, der einen im Wesentlichen halbkreisförmigen Abschnitt (18) aufweist, umfasst,
**dadurch gekennzeichnet, dass** jede Lasche (15, 16) einen geraden Zwischenabschnitt (17) besitzt, der den halbkreisförmigen Abschnitt (18) mit dem zentralen Körper (14) verbindet, wobei der Zwischenabschnitt (17) zwei im Wesentlichen parallele gerade Ränder (19, 20) aufweist.

2. Ventil (1) nach Anspruch 1, wobei die Platte eine erste Positionierlasche (15) und eine zweite Positionierlasche (16) umfasst, die jeweils einen Umfang aufweisen, der einen im Wesentlichen halbkreisförmigen Abschnitt (18) aufweist.

3. Ventil (1) nach Anspruch 1 oder 2, wobei sich die Platte (4) in einer Ebene erstreckt und die erste und die zweite Lasche (15, 16) in dieser Ebene winkelversetzt (14) sind.

4. Ventil (1) nach einem der Ansprüche 1 bis 3, wobei die Platte (4) am Motor (2) befestigt ist, so dass sie ein einziges Teil bilden.

5. Ventil (1) nach einem der Ansprüche 1 bis 3, wobei der Motor (2) eine längliche Form besitzt und die Platte (4) so an einem Ende (8) des Motors (2) befestigt ist, dass die Ebene der Platte (4) zur Längsachse des Motors (2) senkrecht ist.

6. Ventil (1) nach Anspruch 5, wobei die Platte (4) vom Motor (2) seitlich vorsteht.

7. Ventil (1) nach einem der Ansprüche 1 bis 6, wobei der Körper (3) des Ventils (1) mit einer Aufnahme und mit einer Ausnehmung (13) versehen ist, die dazu bestimmt sind, eine Anordnung (5) aufzunehmen, wobei der Motor (2) dann in der Aufnahme und die Platte (4) in der Ausnehmung (13) angeordnet wird, wobei die Ausnehmung (13) von einer Wand (22) begrenzt wird, von der wenigstens ein Bereich (23), der dafür vorgesehen ist, eine jeweilige Lasche (15, 16) aufzunehmen, ein halbkreisförmiges Profil aufweist.

8. Ventil (1) nach Anspruch 7, wobei die Wand (22) aus Guss hergestellt ist und lokal bearbeitet worden ist, um das halbkreisförmige Profil jedes Bereichs (23) zu erhalten.

9. Ventil (1) nach einem der Ansprüche 7 oder 8, wobei die Wand (22) mindestens einen Positionierstift (24, 25), insbesondere zwei vorstehende Positionierstifte (24, 25), aufweist, die dazu bestimmt sind, eine jeweilige Lasche (15, 16) bei Einsetzen zu führen.

10. Ventil (1) nach Anspruch 9, wobei der Körper dazu bestimmt ist, die Anordnung (5) aufzunehmen, welche die Platte (4) aufweist, und wobei die zwei Positionierstifte (24, 25) gegenüber den zwei geraden Rändern (19, 20) des Zwischenabschnitts (17) angeordnet sind.

## Claims

1. Valve (1) having a body (3) and an actuation assembly (5) comprising a motor (2) and a plate (4), the plate comprising a central body (14) and at least one positioning tab (15, 16) having a perimeter having a substantially semicircular portion (18),
**characterized in that** each tab (15, 16) has a rectilinear intermediate portion (17), connecting the semicircular portion (18) to the central body (14), the intermediate portion (17) having two substantially parallel rectilinear edges (19, 20).

2. Valve (1) according to Claim 1, wherein the plate comprises a first positioning tab (15) and a second positioning tab (16) that each have a perimeter having a substantially semicircular portion (18).

3. Valve (1) according to Claim 1 or 2, the plate (4) extending in a plane, and the first and second tabs (15, 16) being (14) angularly offset in said plane.

4. Valve (1) according to one of Claims 1 to 3, said plate (4) being fastened to said motor (2) so as to form a common piece.

5. Valve (1) according to one of Claims 1 to 3, wherein the motor (2) has an elongate shape and the plate (4) is fastened to an end (8) of said motor (2) such that the plane of said plate (4) is perpendicular to the longitudinal axis of said motor (2).

6. Valve (1) according to Claim 5, wherein the plate (4) protrudes laterally from said motor (2).

7. Valve (1) according to one of Claims 1 to 6, wherein the body (3) of the valve (1) is provided with a recess and a cutout (13) that are intended to receive an assembly (5), the motor (2) being placed in the recess and the plate (4) in the cutout (13), said cutout (13) being delimited by a wall (22) of which at least one zone (23) designed to house each tab (15, 16) has a semicircular profile.

8. Valve (1) according to Claim 7, wherein the wall (22) is produced by casting and has been machined locally so as to obtain the semicircular profile of each zone (23) .

9. Valve (1) according to either of Claims 7 and 8, wherein the wall (22) has at least one indexing peg (24, 25), in particular two protruding indexing pegs (24, 25) that are intended to guide the insertion of each tab (15, 16) .

10. Valve (1) according to Claim 9, wherein the body is intended to receive the assembly (5) having the plate (4), and wherein the two indexing pegs (24, 25) are placed facing the two rectilinear edges (19, 20) of the intermediate portion (17).
